# EUROPEAN PATENT APPLICATION

(11) **EP 1 981 275 A1**
(43) Date of publication of application: **15.10.2008**
(21) Application number: 07007446.3
(22) Date of filing: 11.04.2007
(51) Int. Cl.: H04N 7/173

(54) **Method for inserting an additional content in at least one digital content by intermediation means for additional content**

(71) Applicant: Vodafone Holding GmbH, 40213 Düsseldorf (DE)
(72) Inventor: van de Bergh, Marco, 6221 Maastricht (NL); Schuster, Wolfgang, 81377 München (DE); Barry, Peter, Alamo, California 94507 (US)
(74) Representative: Müller, Thomas

(57) **Abstract**

The invention relates to a method for inserting an additional content in at least one digital content by intermediation means for additional content, whereas the digital content is developed for a visual and/or acoustic display at at least one mobile electronic terminal, whereby following steps are performed by the intermediation means: Access to the metadata, which are assigned to the at least one digital content, whereby the metadata possesses details for inserting additional content into the digital content; Interpretation of the metadata by interpretation means, which are assigned to the intermediation means; Comparison of the interpreted metadata of the digital content with information about additional content, whereby the additional content is saved at a database, which is assigned to the intermediation means; in case of consistency of the information of one additional content with the metadata of the at least one digital content automatically insertion of the additional content in the at least one digital content.

## Description

The invention relates to a method for inserting an additional content in at least one digital content by intermediation means for additional content, whereas the digital content is developed for a visual and/or acoustic display at at least one mobile electronic terminal. The invention further relates to intermediation means for inserting an additional content in at least one digital content, whereas the digital content is developed for a visual and/or acoustic display at at least one mobile electronic terminal.

Mobile Advertising is gaining traction in the marketplace. The increasing availability of multimedia content is opening a very large opportunity for sophisticated forms of mobile advertising. As content that already incorporates advertising, i.e. like live TV programming, makes its way as well to mobile handsets. Brands and entertainment content provider are beginning to see the value of presenting full multimedia advertisements with programs.

Therefore providers across the value chain are developing their strategies and positioning themselves in this market space. Operators are either testing various forms of advertising with 3G services or are allowing advertisements to be served on their portals. A number of multimedia companies are launching advertising within their multimedia offering.

The key advantage of a mobile device, like a mobile phone, is that it is a very personal device that a lot of people carry with them 24 hours a day. Therefore one aim of advertisers is to present very targeted and time-sensitive information that is of interest to the costumer. The target group of an advertiser can be reached 24 hours a day, a lot more efficient and a lot more intensive. It is possible to reach a customer through a medium that puts information about products and services directly to the customers' hands. The click rates of mobile advertisements are a lot higher than the click rates of internet banner advertisements, because it is possible to reach the customer more directly. Mobile advertising enables an advertiser to reach a highly desirable demographic target group. Mobile advertising enables an advertiser to easily and cost-effectively advertise in an uncluttered environment, reach a certain audience and deliver personalized messages.

To further stimulate market development, companies are offering automated mobile advertisement insertion and inventory management solutions. Automating the mobile advertising marketplace implies a high degree of standardized interconnects between companies in the mobile advertising place. Some of the information exchanged between the parties in the value chain needs to be protected by DRM technology to protect the creators rights.

Digital content can be for example mobile software games, mobile videos or MP3 songs. To provide mobile advertising in digital content there is a very complex value chain. That means there are a lot of relationships between various actors in the value chain. First of all there are the advertisers. The advertisers are companies wanting to communicate their brands or products to a large customer base. Then, there are the content producers, which are responsible for producing the digital content. Between the advertisers and the content producers are two more actors. At first, there are the advertisement agencies. The advertisement agencies are contracted by the advertisers to produce an advertising campaign on their behalf. Typically these advertisement agencies are responsible for creative production, the actual creation of the advertisement and the media planning, like selecting the target groups for the advertisement, the time planning of the release of the advertisement or selecting the medium, i.e. newspapers, TV, mobile devices, etc.. The second actor between the advertisers and the content producers are the advertisement insertion intermediaries.

The advertisement insertion intermediaries are managing contracts between mobile operators and/or mobile content publishers on one side and advertisers and/or advertisement agencies on the other side. With these advertisement insertion intermediaries two distinct roles can be identified. The mobile advertising inventory, which is a party owning an inventory of mobile advertising content ready for insertion in digital content. Further the insertion technology provider, which is a party having developed special technology capabilities to insert advertisements in digital content channels, like SMS or mobile games. The content producers should give its consent to the advertisement insertion intermediary to insert advertisements in its content. This relationship is based on industry ethics and the necessity to avoid copyright claims. The relationship between the advertisement agencies and the advertisement insertion intermediary is a contractual relationship quantifying the delivery of advertisements over a certain channel for a certain price. The operator or content publisher and the advertisement insertion intermediary have a contractual relationship which allows the advertisement insertion intermediary to insert advertisements in content on the publisher sides. Usually this also contains some form of revenue share agreement for the advertising value of the content. The relationship between the content producer and the content publisher, i.e. an operator, is a contractual relationship, which allows the content publisher to publish the content publisher's content on its sides. Usually this also contains some form of revenue share agreement for the value of the content. That means, the content producer does often not care whether the publisher get the money from its customers or from the advertiser.

The current mobile advertising market is characterized by the many contracts between the actors of the mobile advertising value chain described before. There are many contracts necessary to deliver a national mobile advertising campaign. In this sense, the mobile advertising value chain is more complex than other forms of advertising. The advertisement agencies need to establish contracts with multiple, around 3.5, content publishers, typically the mobile operators of a specific country, in order to be able to address a national audience. This set up of ad hoc contracts with operators is currently a time consuming activity. The content publisher needs to have a constant supply of advertisements to keep their ad-sponsored content channels operational. The operators have to contact multiple content producers to get their consent for inserting advertisements in their content.

This difficulties and market inefficiencies justifies the existence of the advertisement insertion intermediary. The advertisement insertion intermediaries manage for example a number of contracts with national telecom operators or other content publishers for the advertisement agencies and advertisers and therefore make ad hoc campaigns easier to plan and implement on a national scale. The advertisement insertion intermediaries manage a number of contracts with advertisement agencies and advertisers for mobile telecom operators or mobile content publishers and therefore guarantee a constant flow of advertisements for their advertisement-sponsored content channels. Further, the advertisement insertion intermediaries manage a portfolio of technology solutions for inserting advertisement on behalf of operators/content publishers and advertisement agencies and can therefore offer a large range of technical advertising solutions, like SMS, video insertion, game insertion, etc..

But in the current mobile advertising market, there is still a necessity for getting the right advertisement to the right costumer. That means a lot of advertisement is not relevant for the costumers. The advertisement is depended from the age and the taste of the costumer. A seventy year old costumer can not be affected by an advertisement regarding to a new song of a boy band. On the other hand a fifteen year old teenager does not need to have information about financing of a house. A process which has not been automated to date, is linking the additional content, in particular advertisement, to digital content in a contextual manner.

The problem to be solved by the present invention is thus to overcome these remaining inefficiencies. That means, the aim of the invention is to provide a method for inserting an additional content in at least one digital content by intermediation means for additional content, whereas the digital content is developed for a visual and/or acoustic display at at least one mobile electronic terminal, which makes sure that the additional content, in particular advertisement, inserted into the digital content is relevant for the customer.

The invention is based on the finding that the problem can be solved by a method for inserting an additional content in at least one digital content by intermediation means for additional content, whereas the digital content is developed for a visual and/or acoustic display at at least one mobile electronic terminal.

The problem is solved by a method according to independent claim 1 and by intermediation means for inserting additional content into digital content according to independent claim 12. Further features and advantageous embodiments will become apparent from the dependent claims and the description. Advantages and features described with respect to the inventive method also apply to the intermediation means for inserting additional content into digital content accordingly and vice versa.

The present invention relates to a method for inserting an additional content in at least one digital content by intermediation means for additional content, whereas the digital content is developed for a visual and/or acoustic display at at least one mobile electronic terminal, whereby following steps are been performed by the intermediation means:
a) Access to the metadata, which are assigned to the at least one digital content, whereby the metadata possesses details for inserting additional content into the digital content,
b) Interpretation of the metadata by interpretation means, which are assigned to the intermediation means,
c) Comparison of the interpreted metadata of the digital content with information about additional content, whereby the additional content is saved at a database, which is assigned to the intermediation means,
d) In case of consistency of the information of one additional content with the metadata of the at least one digital content automatically insertion of the additional content in the at least one digital content.

The intermediation means can be assigned to an advertisement insertion intermediary or to an advertisement serving intermediary, respectively.

Metadata in the light of the invention shall be information about data. That means the metadata shall be information about the digital content itself. Every party can act in accordance with the information shown in the metadata of the digital content. The metadata is structured, encoded data that describe characteristics of the digital content, i.e. free space in the digital content. The metadata are data that describe the structure and workings of an organization's use of the digital content.

This method for inserting an additional content in at least one digital content by intermediation means for additional content, whereas the digital content is developed for a visual and/or acoustic display at at least one mobile electronic terminal, makes sure that the additional content, in particular advertisement, which can be inserted into the digital content, is relevant for the customer.

The method describes a process to link additional content, in particular advertisement, to digital content in a contextual manner.

In a first step, the intermediation means accesses to metadata, which are assigned to the at least one digital content. The metadata possesses details for inserting additional content into the digital content. Get access to the metadata means that the intermediation means are able to read the format of the information describes in the metadata. In a second step, interpretation means, which are assigned to the intermediation means, interprets the metadata. In this step the interpretation means reads out the information describes in the metadata. The interpretation means can read the contextual manner written down in the metadata. After interpreting the metadata the intermediation means compare the interpreted metadata of the digital content with information about additional content, whereby the additional content is saved at a database, which is assigned to the intermediation means. This assigned database stores a lot of information. This information can be information about business, economics, sports, advertisement, etc.. In one example this information can be a video about a specific artist, like the latest Madonna video. In case of consistency of the information of one additional content and the metadata of the at least one digital content the intermediation means automatically insert the additional content into the at least one digital content. If there are some consistencies between the information of one additional content and the information of the metadata the intermediation means links the additional content to the at least one digital content. Through this inventive method the costumer gets additional content to his digital content, whereby the additional content bears relation to the digital content. If the costumer uses digital content in form of MP3 songs, the metadata of this digital content comprise information that the digital content is a MP3 song. The intermediation means compares this information with the additional content stored in the database und checks, if there are some other MP3 songs stored in the database. If there are some similar MP3 songs, in particular of the same artist stored in the database, the intermediation means automatically insert the additional content into the at least one digital content. The costumer gets additional information to his digital content, whereby this additional content bears reference to the digital content. The customer gets for example information about MP3 songs of a second artist, if the intermediation means checks that the customer hears a MP3 song from a first artist. The intermediation means uses the content's metadata to check the descriptive text about the digital content. After the check the intermediation means uses the descriptive text to automatically search in the database und inserts the most relevant additional content for the digital content. For example, the metadata used can be inbound, that means as part of the digital content header or outbound, that means in a separate file linked to the digital content. In the second case, the separate file can be in form of a jad-file for a Java game.

The additional content is shown on a display and/or is announced by loudspeaker means of the mobile electronic terminal, like a mobile telephone, a PDA or the like, which is used by the customer. The additional content can be seen or can be heard by the user of the mobile electronic terminal.

Preferred is a method, whereby the additional content comprises advertisement. The additional content can be all kind of information or data, but the additional content is in the first instance advertisement. By automatically inserting advertisement into the digital content of a content producer the costumers gets advertisement, which bears relation to the digital content. Therefore the method is a easy and cheap method to reach a certain target group with certain advertisement. The advertisement which is relevant to the digital content is therefore in most cases relevant for the age of the costumer and/or the costumers' consumer behaviour.

Advantageous is further a method, whereby the access of the intermediation means to the metadata assigned to the digital content is done by interface means. By using interface means the intermediation means are able to read out the metadata. Preferred is a method, whereby the access of the intermediation means to the metadata assigned to the digital content is done by an electronic mobile terminal during the download of the at least one digital content, whereby the electronic mobile terminal downloads the at least one digital content from server means of a provider of the at least one digital content. In a advantageous step of the method, the intermediation means can transmit the additional content to the server means of the provider of the at least one digital content, so that the server means can insert the additional content into the at least one digital content before or during the transmitting of the at least one digital content to the electronic mobile terminal.

Further preferred is a method, whereby the interpretations means encodes the metadata, if the metadata are been codified by a digital rights management. Through the possibility of encoding the metadata protected metadata can be read out, as well.

In a further step of the method, it is advantageous that the interpretations means transmits an user authentication to the server means of the provider of the at least one digital content after identifying that the metadata of the a least one digital content is codified. To get a permission to access the metadata the interpretations means can transmit an authentication. Therefore the provider of the at least one digital content can control, who likes to access the metadata. In a preferred step, the interpretations means transmits the user authentication together with the additional content to the server means of the provider of the at least one digital content. This saves time for inserting the additional content into the digital content.

During the interpretation of the metadata the interpretation means can check the metadata regarding information about the type of the additional content, which can be inserted, the location, where the additional content can be inserted into the at least one digital content, the dimension of the additional content, the format of the additional content, the particular time and/or the duration of the additional content, which can be inserted into the digital content. Further it is possible that during the interpretation of the metadata the interpretation means checks the metadata regarding information contract agreements about the at least one digital content and/or the permission to insert additional content into the digital content and/or the target group, which is aim of the digital content. All this information can influence the intermediation means, which additional content is inserted to the digital content.

Preferred is further a method, whereby during the comparison of the interpreted metadata of the at least one digital content with information about additional content, the information about the additional content regarding the location, where the additional content can be inserted into the at least one digital content, the type, the dimension, the format, the particular time and/or the duration is compared with information of the metadata of the at least one digital content regarding the location, where the additional content can be inserted into the at least one digital content, the type, the dimension, the format, the particular time and/or the duration. This helps to find the most relevant additional content, in particular the most relevant advertisement.

According to a second aspect of the invention, the problem is solved by intermediation means for inserting an additional content in at least one digital content, whereas the digital content is developed for a visual and/or acoustic display at at least one mobile electronic terminal, with access means for accessing to metadata, which are assigned to the at least on digital content, whereby the metadata possesses details for inserting additional content into the digital content, with assigned interpretation means for interpreting the metadata, with comparison means for comparing the interpreted metadata of the at least one digital content with information about additional content, whereby the additional content is saved at a database, which is assigned to the intermediation means, and with insertion means for an automatically insertion of the additional content in the at least one digital content in the case of consistency of the information of one additional content with the metadata of the at least one digital content. The intermediation means are constructed or build for performing the method described before, respectively.

The intermediation means makes sure that the additional content, in particular advertisement, which can be inserted into the digital content, can automatically be inserted into the digital content and makes sure that the additional content is relevant for the customer. The intermediation means are able to link additional content, in particular advertisement, to digital content in a contextual manner.

The intermediation means are able to access to metadata, which are assigned to the at least one digital content, because the metadata possesses details for inserting additional content into the digital content. The interpretation means, which are assigned to the intermediation means, interprets the metadata. The interpretation means are able to read out the information describes in the metadata. The interpretation means can read the contextual manner written down in the metadata. After interpreting the metadata comparison means of the intermediation means compare the interpreted metadata of the digital content with information about additional content, whereby the additional content is saved at a database, which is assigned to the intermediation means. This assigned database stores a lot of information. This information can be information about business, economics, sports, advertisement, etc.. The information can be a video about a specific artist, like the latest Madonna video. In case of consistency of the information of one additional content and the metadata of the at least one digital content insertion means of the intermediation means automatically insert the additional content into the at least one digital content. If there are some consistencies between the information of one additional content and the information of the metadata the insertion means of the intermediation means links the additional content to the at least one digital content. Through this intermediation means the costumer gets additional content to his digital content, whereby the additional content bears relation to the digital content. The costumer gets additional information to his digital content, whereby this additional content bears reference to the digital content. The customer gets for example information about MP3 songs of an artist, if the intermediation means checks that the customer hears a MP3 song from the artist.

Preferred are intermediation means, which are constructed for insertion of advertisements into the at least one digital content.

The intermediation means have advantageously an air interface for accessing the metadata assigned to the at least one digital content. It is further preferred, when the interpretation means are build for encoding of codified metadata.

The advertisement inserting or serving intermediary is responsible for inserting mobile advertisement in mobile content. i.e. Java games, MP3 music, MPEG videos. In order to make the mobile advertisement relevant with regards to the mobile content download, i.e. present an advertisement about the latest CD's when downloading a Madonna video, as part of the insertion process the intermediary uses the content's metadata, the data-on-data, to check a descriptive text about the content. It then uses the descriptive text to automatically search in its advertising inventory and insert the most relevant ad for this content. The metadata used can be both inbound, i.e. as part of the content header, or outbound, i.e. in separate file linked to the content, e.g. the jad-file for a Java game.

The mobile electronic device can be a mobile phone, a small portable computer, a smart phone, a PDA (PDA = personal digital assistant), or the like.

## Claims

1. Method for inserting an additional content in at least one digital content by intermediation means for additional content, whereas the digital content is developed for a visual and/or acoustic display at at least one mobile electronic terminal, **characterized by** following steps performed by the intermediation means:
a) Access to the metadata, which are assigned to the at least one digital content, whereby the metadata possesses details for inserting additional content into the digital content,
b) Interpretation of the metadata by interpretation means, which are assigned to the intermediation means,
c) Comparison of the interpreted metadata of the digital content with information about additional content, whereby the additional content is saved at a database, which is assigned to the intermediation means,
d) In case of consistency of the information of one additional content with the metadata of the at least one digital content automatically insertion of the additional content in the at least one digital content.

2. Method according to claim 1, **characterised in that** the additional content comprises advertisement.

3. Method according to claim 1 or 2, **characterised in that** the access of the intermediation means to the metadata assigned to the digital content is done by interface means.

4. Method according to one of the claims 1 to 3, **characterised in that** the access of the intermediation means to the metadata assigned to the digital content is done by an electronic mobile terminal during the download of the at least one digital content, whereby the electronic mobile terminal downloads the at least one digital content from server means of a provider of the at least one digital content.

5. Method according to claim 4, **characterised in that** the intermediation means transmits the additional content to the server means of the provider of the at least one digital content and the server means inserts the additional content into the at least one digital content before or during the transmitting of the at least one digital content to the electronic mobile terminal.

6. Method according to one of the claims 1 to 5, **characterised in that** the interpretations means encodes the metadata, if the metadata are been codified by a digital rights management.

7. Method according claim 6, **characterised in that** the interpretations means transmits an user authentication to the server means of the provider of the at least one digital content after identifying that the metadata of the a least one digital content is codified.

8. Method according claim 7, **characterised in that** the interpretations means transmits the user authentication together with the additional content to the server means of the provider of the at least one digital content.

9. Method according to one of the claims 1 to 8, **characterised in that** during the interpretation of the metadata the interpretation means checks the metadata regarding information about the type of the additional content, which can be inserted, the location, where the additional content can be inserted into the at least one digital content, the dimension of the additional content, the format of the additional content, the particular time and/or the duration of the additional content, which can be inserted into the digital content.

10. Method according to one of the claims 1 to 9, **characterised in that** during the interpretation of the metadata the interpretation means checks the metadata regarding information contract agreements about the at least one digital content and/or the permission to insert additional content into the digital content and/or the target group, which is aim of the digital content.

11. Method according to one of the claims 9 or 10, **characterised in that** during the comparison of the interpreted metadata of the at least one digital content with information about additional content, the information about the additional content regarding the location, where the additional content can be inserted into the at least one digital content, the type, the dimension, the format, the particular time and/or the duration is compared with information of the metadata of the at least one digital content regarding the location, where the additional content can be inserted into the at least one digital content, the type, the dimension, the format, the particular time and/or the duration.

12. Intermediation means for inserting an additional content in at least one digital content, whereas the digital content is developed for a visual and/or acoustic display at at least one mobile electronic terminal, with access means for accessing to metadata, which are assigned to the at least on digital content, whereby the metadata possesses details for inserting additional content into the digital content, with assigned interpretation means for interpreting the metadata, with comparison means for comparing the interpreted metadata of the at least one digital content with information about additional content, whereby the additional content is saved at a database, which is assigned to the intermediation means, and with insertion means for an automatically insertion of the additional content in the at least one digital content in the case of consistency of the information of one additional content with the metadata of the at least one digital content.

13. Intermediation means according to claim 12, **characterised in that** the intermediation means are build for performing the method according to one of the claims 1 to 11.

14. Intermediation means according to claim 12 or 13, **characterised in that** the intermediation means are build for insertion of advertisements into the at least one digital content.

15. Intermediation means according to one of the claims 12 to 14, **characterised in that** the intermediation means have an air interface for accessing the metadata assigned to the at least one digital content.

16. Intermediation means according to one of the claims 12 to 15, **characterised in that** the interpretation means are build for encoding of codified metadata.
